# EUROPÄISCHE PATENTANMELDUNG

(11) **EP 2 570 768 A1**
(43) Veröffentlichungstag der Anmeldung: **20.03.2013**
(21) Anmeldenummer: 11181396.0
(22) Anmeldetag: 15.09.2011
(51) Int. Cl.: G01C 1/04, G01C 15/00

(54) **Vermessungsgerät und Verfahren zum gefilterten Darstellen von Objekt-Information**

(71) Anmelder: Leica Geosystems AG, 9435 Heerbrugg (CH)
(72) Erfinder: Lienhart, Werner, A-8010 Graz (AT)
(74) Vertreter: Kaminski Harmann

(57) **Zusammenfassung**

Die Erfindung betrifft ein geodätisches Vermessungsgerät, insbesondere Totalstation oder Theodolit, mit zumindest einer um zwei Achsen schwenkbaren Anzieleinheit, wobei die Anzieleinheit eine Anzielrichtung in einem Koordinatensystem definiert und eine Kamera aufweist mit einem aktuellen Sichtbereich zur Erfassung eines Kamerabilds (10) im Wesentlichen in Anzielrichtung. Zudem sind in einer Datenbank gespeicherten Objekt-Daten, wobei die Objekt-Daten mit einem jeweiligen eine Position im Koordinatensystem angebenden Positionsbezug gespeichert sind, eine grafische Ausgabeeinheit (11) auf der das Kamerabild (10) und die Objekt-Daten darstellbar sind, und eine Steuerungs- und Verarbeitungseinheit vorgesehen. Ferner weist das Vermessungsgerät eine Filterfunktionalität aufweist, in deren Rahmen ein dynamisches Filtern erfolgt, wobei im Rahmen des dynamischen Filterns die Objekt-Daten in Abhängigkeit des aktuellen Sichtbereichs gefiltert werden und ein statisches Filtern erfolgt, wobei im Rahmen des statischen Filterns die Objekt-Daten in Abhängigkeit eines benutzerseitig wählbaren oder vorgebbaren Auswahlkriteriums gefiltert werden. Zudem werden die durch das dynamische und statische Filtern gefilterten ObjektDaten mittels die Objekt-Daten repräsentierender Markierungen (20,21) zusammen mit dem Kamerabild (10) grafisch auf der Ausgabeeinheit (11) dargestellt werden, wobei die Markierungen (20,21) an einer jeweiligen durch den Positionsbezug referenzierten Stelle im Kamerabild (10) dargestellt werden.

## Beschreibung

Die Erfindung betrifft ein geodätisches Vermessungsgerät mit einer Anzieleinheit, einer Kamera und einer Ausgabeeinheit nach dem Oberbegriff des Anspruchs 1 und ein erfindungsgemässes Verfahren zur gefilterten Darstellung von Information mit einem geodätischen Vermessungsgerät nach Anspruch 8.

Zum Vermessen eines oder insbesondere mehrerer Zielpunkte sind seit der Antike zahlreiche geodätische Vermessungsgeräte bekannt. Als räumliche Standarddaten werden dabei Entfernung und Richtung bzw. Winkel von einem Messgerät zum zu vermessenden Zielpunkt aufgenommen sowie insbesondere die absolute Position des Messgerätes nebst eventuell vorhandenen Bezugspunkten erfasst.

Allgemein bekannte Beispiele für solche geodätische Vermessungsgeräte stellen Theodolit, Tachymeter und Totalstation, die auch als elektronischer Tachymeter oder Computer-Tachymeter bezeichnet wird, dar. Eine geodätische Messvorrichtung des Stands der Technik ist beispielsweise in der Veröffentlichungsschrift EP 1 686 350 beschrieben. Derartige Geräte verfügen über elektrosensorische Winkelund Distanzmessfunktionen, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung gegebenenfalls noch mit einem äusseren Bezugssystem verknüpft werden.

In vielen geodätischen Anwendungen erfolgt eine Vermessung von Punkten, indem dort speziell ausgestaltete Zielobjekte platziert werden. Diese bestehen meist aus einem Lotstock mit einem anzielbaren Modul z.B. mit einem Reflektor zur Definition der Messtrecke bzw. des Messpunktes. Diese Zielobjekte werden mittels eines Vermessungsgeräts angezielt, eine Richtung und eine Distanz zu den Objekten bestimmt und somit eine Position der Objekte abgeleitet.

In Analogie zu dieser Punktvermessung kann ein Abstecken bzw. eine Markierung bereits koordinativ bekannter Zielpunkte bzw. von Punkten, deren Positionen im Vorfeld eines Markiervorgangs definiert wurden, erfolgen. Im Gegensatz zur Punktvermessung sind in diesem Fall die Position bzw. die Koordinaten der abzusteckenden Punkte bekannt und sollen markiert werden. Für einen solchen Vorgang wird üblicherweise ebenfalls ein Lotstock bzw. eine Vermessungsstange verwendet, die von einem Benutzer geführt und auf einem Zielpunkt positioniert wird. Der Benutzer kann sich hierfür auf Basis von durch das Vermessungsgerät generierten Positionsinformationen an die Zielposition des Zielpunktes herantasten, wobei der Vermessungsstab von dem Vermessungsgerät durch eine zweite Person oder durch einen dem Vermessungsgerät zugeordneten Automatismus automatisch angezielt wird. Ist der Zielpunkt erreicht, kann der Benutzer eine Markierung des Punktes vornehmen.

Moderne Vermessungsgeräte wie eine Totalstation verfügen über Mikroprozessoren zur digitalen Weiterverarbeitung und Speicherung erfasster Messdaten. Die Geräte sind in der Regel in kompakter und integrierter Bauweise hergestellt, wobei meist koaxiale Distanz- und Winkelmesselemente sowie Rechen-, Steuer- und Speichereinheiten in einem Gerät integriert sind. Abhängig von der Ausbaustufe der Totalstation sind Mittel zur Motorisierung der Zieloptik, zur reflektorlosen Streckenmessung, zur automatischen Zielsuche und -verfolgung und zur Fernsteuerung des gesamten Geräts integriert.

Aus dem Stand der Technik bekannte Totalstationen verfügen des Weiteren über eine Funkdatenschnittstelle zum Aufbau einer Funkverbindung zu externen Peripheriekomponenten wie z.B. zu einem Datenerfassungsgerät, welches insbesondere als handhaltbarer Datenlogger, Fernbedieneinheit, Feldrechner, Notebook, Kleincomputer oder PDA ausgebildet sein kann. Mittels der Datenschnittstelle ist es möglich, von der Totalstation erfasste und gespeicherte Messdaten zur externen Weiterverarbeitung auszugeben, extern erfasste Messdaten zur Speicherung und/oder Weiterverarbeitung in die Totalstation einzulesen, Fernsteuersignale zur Fernsteuerung der Totalstation oder einer weiteren externen Komponente insbesondere im mobilen Feldeinsatz ein- bzw. auszugeben und Steuerungs-Software in die Totalstation zu überspielen.

Zum Anvisieren bzw. Anzielen des zu vermessenden Zielpunkts weisen gattungsgemässe geodätische Vermessungsgeräte beispielsweise ein Zielfernrohr, wie z.B. ein optisches Teleskop, als Visiereinrichtung auf. Das Zielfernrohr ist im Allgemeinen um eine vertikale Stehachse und um eine horizontale Kippachse relativ zu einer Basis des Messgeräts drehbar, sodass das Fernrohr durch Schwenken und Kippen auf den zu vermessenden Punkt ausgerichtet werden kann. Moderne Geräte können additiv zum optischen Sichtkanal eine in das Zielfernrohr integrierte und beispielsweise koaxial oder parallel ausgerichtete Kamera zur Erfassung eines Bildes aufweisen, wobei das erfasste Bild insbesondere als Live-Bild auf dem Display der Anzeige-Steuereinheit und/oder auf einem Display des zur Fernsteuerung verwendeten Peripheriegeräts - wie z.B. des Datenloggers oder der Fernbedieneinheit - dargestellt werden kann. Die Optik der Visiereinrichtung kann dabei einen manuellen Fokus - beispielsweise eine Stellschraube zur Veränderung der Position einer Fokussieroptik - aufweisen, über einen Autofokus verfügen, wobei das Verändern der Fokusposition z.B. durch Servomotoren erfolgt oder eine fixe Fokussierung in Verbindung mit einem Weitwinkelobjektiv aufweisen. Automatische Fokussiereinrichtungen für Zielfernrohre geodätischer Geräte sind z.B. aus der DE 197 107 22, der DE 199 267 06 oder der DE 199 495 80 bekannt.

Auf einem mit der Kamera erfassten Bild können zudem - gemäss bekannter Ausführungsformen gattungsgemässer Vermessungsgeräte - Informationen zu Zielpunkten, die Punkte selbst, Objektstrukturen und weitere Objekt-Daten überlagert eingeblendet werden. Diese Daten können beispielsweise aus einem dreidimensionalen Geländemodell stammen. Mittels einer derartigen Bereitstellung von Design-Daten auf einem Display zusammen mit dem erfassten Bild, kann z.B. eine Überwachung bzw. ein Monitoring von Baufortschritten durchgeführt werden. Ein solches elektronisches Vermessungsgerät mit einer Bilderfassungseinheit und einer Ausgabeeinheit zur Darstellung von Design-Daten ist beispielsweise aus der EP 1 469 281 bekannt.

Bei einer derartigen Darstellung von Objekt-Daten in einem mit einer Kamera erfassten Bild kann die Anzahl der im Bild gezeigten Objekte bzw. Informationen zu Objekten in Abhängigkeit der jeweiligen Messbedingung stark variieren. Ist das Sichtfeld der Kamera z.B. in eine Richtung ausgerichtet, in welcher eine Vielzahl von gespeicherten Objekt-Daten im Sichtfeld liegt, so kann eine überlagerte Darstellung der Information aufgrund vieler sich überschneidender Symbole, insbesondere für einen Benutzer, sehr unübersichtlich wirken.

Hinsichtlich des Standes der Technik ist bei überlagerten Darstellungsformen demnach nachteilig, dass eine hohe Anzahl von Information oder Strukturen in einem Kamerabild gleichzeitig dargestellt werden, ein Operator des Vermessungssystems jedoch nur einen kleineren Anteil der gezeigten Informationsfülle zur Ausführung seiner Messaufgabe benötigt. Bisherig muss der Operator in einem solchen Fall mühsam die für ihn relevanten Objekt-Daten im Bild identifizieren. Dieses Vorgehen bedeutet im Rahmen des Messprozesses einen hohen Zeitaufwand und birgt zudem diejenige Fehlerquelle, dass der Bediener des Systems durch die Vielzahl angezeigter Objektdaten eine von der gewünschten Information sich unterscheidende Information auswählt. Ferner können durch die im Bild angezeigten Informationen im Bild erfasste Objekte verdeckt oder nicht identifizierbar sein, obwohl die Bildobjekte sich perspektivisch im Bildvordergrund befinden müssten.

Es ist daher eine Aufgabe der vorliegenden Erfindung ein Verfahren und eine Messvorrichtung bereitzustellen, wobei eine in einem Display angezeigte Datenmenge im Rahmen von Benutzervorgaben reduzierbar ist, insbesondere wobei ausschliesslich die für einen Benutzer relevanten ObjektDaten in einem Kamerabild darstellbar sind.

Eine spezielle Aufgabe der Erfindung besteht darin die Anzeige von Objekt-Daten in einem Bild derart zu gestalten, dass in Abhängigkeit der jeweiligen Messanforderung nur relevante Daten angezeigt werden.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein geodätisches Vermessungsgerät, insbesondere Totalstation oder Theodolit, einmessbar in ein Koordinatensystem, sodass in einem eingemessenen Zustand eine Aufstellposition und eine Ausrichtung des Vermessungsgeräts bekannt sind, mit zumindest einer um zwei Achsen schwenkbaren Anzieleinheit, insbesondere Fernrohr, wobei die Anzieleinheit eine Anzielrichtung im Koordinatensystem definiert und eine Kamera mit einem aktuellen Sichtbereich zur Erfassung eines Kamerabilds im Wesentlichen in Anzielrichtung, wobei der Sichtbereich in Abhängigkeit der Anzielrichtung aktualisierbar ist, aufweist. Eine Erfassungsrichtung der Kamera kann dabei z.B. parallel versetzt oder koaxial zur Anzielrichtung (d.h. zur Emissionsrichtung eines zur Entfernungsmessung vorgesehenen Laserstrahls), sodass das Kamerabild dann im Wesentlichen in Richtung der Anzielrichtung erfassbar ist, insbesondere wobei das Kamerabild durch ein Live-Bild verkörpert wird. Weiters weist das Vermessungsgerät eine Winkel- und Entfernungsmessfunktionalität, in einer Datenbank gespeicherte Objekt-Daten, wobei die Objekt-Daten mit einem jeweiligen eine Position im Koordinatensystem angebenden Positionsbezug gespeichert sind, insbesondere Objektkoordinaten, eine grafische Ausgabeeinheit auf der das Kamerabild und die Objekt-Daten darstellbar sind, und eine Steuerungs- und Verarbeitungseinheit auf.

Ferner weist das Vermessungsgerät eine Filterfunktionalität auf, in deren Rahmen bei Ausführung der

Filterfunktionalität automatisch gesteuert durch die Steuerungs- und Verarbeitungseinheit ein dynamisches Filtern erfolgt, wobei im Rahmen des dynamischen Filterns die Objekt-Daten in Abhängigkeit des aktuellen Sichtbereichs gefiltert werden und ein statisches Filtern erfolgt, wobei im Rahmen des statischen Filterns die Objekt-Daten in Abhängigkeit eines benutzerseitig wählbaren oder vorgebbaren Auswahlkriteriums gefiltert werden, wobei das Auswahlkriterium von einer Positionsrelation, einer Winkelrelation, einer Objekteigenschaft und/oder einer vom Vermessungsgerät bereitgestellten Information abhängt. Zudem werden nur die durch das dynamische und statische Filtern gefilterten Objekt-Daten mittels die Objekt-Daten repräsentierender Markierungen zusammen mit dem Kamerabild grafisch auf der Ausgabeeinheit dargestellt, wobei die Markierungen an einer jeweiligen durch den Positionsbezug referenzierten Stelle im Kamerabild dargestellt werden.

Die erfindungsgemässe Filterung der Objekt-Daten kann insbesondere dann vorteilhaft sein, wenn die Anzahl der in einem Kamerabild dargestellten Daten eine Fülle erreicht, die dazu führt, dass durch die Vielzahl der eingeblendeten Daten oder Markierungen für die Daten die mit der Kamera erfassten Objekte nicht mehr erkennbar sind bzw. verdeckt werden. Ein Benutzer einer erfindungsgemässen Totalstation kann sich im Rahmen der Erfindung in Abhängigkeit einer gewählten Filteroption ungewünschte Daten bzw. deren Markierungen ausblenden oder ausschliesslich gewünschte Daten einblenden lassen. Dabei kann das Filtern unter Berücksichtigung der jeweiligen Position der Objekt-Daten in Relation zur Position der Totalstation und relativ zu sich im Sichtbereich der Kamera befindlichen Hindernissen erfolgen. Weiters kann das Filtern auch in Abhängigkeit eines aus Sicht der Kamera definierbaren Winkelbereichs (innerhalb des Sichtbereichs der Kamera) erfolgen. Entsprechend können Daten, welche sich bezüglich ihrer Position innerhalb oder ausserhalb des Winkelbereichs befinden ein- bzw. ausgeblendet werden. Ferner kann abhängig von Objekteigenschaften gefiltert werden, d.h. es können zusätzlich Informationen zu Objekten berücksichtigt werden, z.B. die Gestalt bzw. Form eines Objekts (z.B. Zielmarke, Retro-Reflektor, etc.), eine Kategorie, der das Objekt zugeordnet sein kann (Strasse, Gebäude, Gelände, Bewuchs, Kanaldeckel, Strassenbeleuchtung, etc.), und/oder farbliche Merkmale des Objekts. Ausserdem kann der Filter mit Informationen der Totalstation versorgt werden, wobei diese Informationen beispielsweise durch Komponenten der Totalstation generiert werden, z.B. in der Anzieleinheit durch eine aktuelle Positionierung einer Fokuslinse und/oder durch eine zusätzliche Entfernungsmessung zu einem Objekt. Als Objekt-Daten können in diesem Zusammenhang beispielsweise sowohl bereits verarbeitete Messwerte als auch noch nicht weiterverarbeitet Daten berücksichtigt werden. Somit können auch solche Objekte, deren Distanz und Winkel relativ zur Totalstation (Positionsbezug) zwar bekannt sind, deren Koordinaten im jeweiligen System jedoch noch nicht berechnet sind, gefiltert werden.

Zur Ausführung der Filterfunktionalität ist vermessungsgeräteseitig eine entsprechende Datenspeichereinheit, z.B. ein Festkörperspeicher (z.B. Festplatte oder USB-Stick) oder eine Daten-CD, vorgesehen, und eine Datenverarbeitungseinheit vorgesehen, wobei die Filterfunktionalität als Softwarepaket bzw. Computerprogrammprodukt auf der Speichereinheit hinterlegt ist und so auf dem Vermessungsgerät ausgeführt werden kann, dass das Filtern mittels des Vermessungsgeräts erfolgt. Das Filtern bei Ausführen der Filterfunktionalität kann somit im Wesentlichen im Rahmen einer durch die Filterfunktionalität vorgegebenen Datenverarbeitungsroutine unter Berücksichtigung von Vermessungsgeräteparametern und den gespeicherten Objekt-Daten erfolgen.

Im Rahmen des statischen und dynamischen Filterns können jeweils Untermengen mit bei der jeweiligen Filterung identifizierten Objekt-Daten erzeugt werden. So können zum einen alle Objekt-Daten, deren Position einer Stelle innerhalb des Sichtbereichs der Kamera zugeordnet werden können einer dynamischen Untermenge und all diejenigen Objekt-Daten, die in bestimmtes Auswahlkriterium erfüllen einer statischen Untermenge zugeordnet werden. Im Rahmen der Filterfunktionalität werden dann die Objekt-Daten bzw. Markierungen für die Objekt-Daten angezeigt, die sowohl in der dynamischen als auch in der statischen Untermenge vorliegen, d.h. es wird eine Schnittmenge der Untermengen gebildet und es werden die Objekt-Daten in der Schnittmenge dargestellt.

Als dynamischer Filter wird im Zusammenhang mit der Erfindung ein Filter verstanden, der in Abhängigkeit von der Ausrichtung der Kamera und damit von dem Sichtfeld der Kamera eine Menge an Objekt-Daten aus einer Objekt-Daten-Gesamtheit herausfiltert, wobei die Zusammensetzung der Menge bei einer Änderung der Anzielrichtung, z.B. bei der Anzielung unterschiedlicher Ziele, (automatisch) variiert und der Filter daher als dynamisch bezeichnet wird. Eine solche Ausrichtungsänderung kann insbesondere fortlaufend durch Schwenken der Anzieleinheit erfolgen. Als statischer Filter hingegen wird ein Filter verstanden, dessen gefilterte Objekt-Daten auch während einer Ausrichtungsänderung oder bei alternativen Umwelteinflüssen beibehalten werden. Diese Filterung erfolgt auf Basis eines von einem Benutzer wählbaren Auswahlkriteriums, wobei diejenigen Objekt-Daten herausgefiltert werden können, die das gesetzte Auswahlkriterium erfüllen. Die statische Filterung kann von einem Benutzer definiert werden und dabei solange beibehalten werden, bis der Benutzer den Filter deaktiviert bzw. ein anderes Auswahlkriterium zur statischen Filterung wählt.

Zur besseren Übersicht im angezeigten Kamerabild können die Objekt-Daten beispielsweise durch objektspezifische Symbole oder Markierungen repräsentiert werden. So kann eine Position eines Verkehrsschilds z.B. anstelle der Darstellung der Koordinatenwerte im Kamerabild durch eine bestimmte Markierung, die im Vorfeld einer Gruppe "Verkehrsschilder" zugeordnet wurde, repräsentiert werden. Ausserdem können die Objekt-Daten in unterschiedlichen Detailstufen angezeigt werden, d.h. es kann beispielsweise nur eine Position durch ein Symbol dargestellt werden oder zusätzlich eine Objekt-ID (Identifikation für ein Objekt) eingeblendet sein.

Insbesondere können die Markierungen bzw. Objekt-Daten ohne das Kamerabild dargestellt werden, wobei - in Abhängigkeit der Anordnung und Informationsdichte - eine (skizzenhafte) perspektivische Darstellung der mit der Kamera korrespondierend erfassbaren Umgebung darstellbar sein.

Zur Ausführung einer präzisen Messung kann das Vermessungsgerät mittels eines Einmessvorgangs in ein Gelände bzw. ein Koordinatensystem eingemessen werden, d.h. das Vermessungsgerät kann an einem Aufstellpunkt aufgestellt werden und koordinativ bekannte Punkte können im Gelände angezielt und hinsichtlich Winkel und Distanz vermessen werden. Aus einer je nach Messaufgabe vermessenen Anzahl bekannter Punkte können so die Position und die Ausrichtung des Vermessungsgeräts geodätisch genau bestimmt und weitere Messungen ausgehend von dem eingemessenen Vermessungsgerät präzise durchgeführt werden. Ausserdem können die aktuelle Aufstellposition und die Ausrichtung des Vermessungsgeräts manuelle, beispielsweise mittels einer Tastatur am Gerät, in das Gerät eingegeben werden und somit die Positionierung und Ausrichtung - auch im Koordinatensystem - bekannt sein.

Weiters kann das Auswahlkriterium erfindungsgemäss in Abhängigkeit eines Distanzschwellwert und/oder Winkelschwellwerts definierbar sein. So kann beispielsweise eine Entfernung ausgehend vom Standort des Vermessungsgeräts definiert werden, wobei diejenigen Objekt-Daten bzw. die Markierungen der Objekt-Daten eingeblendet werden können, deren durch den Positionsbezug angegebene Position entweder eine kleiner oder eine grössere Entfernung zur Totalstation definiert. Analog dazu kann auch ein Horizontal- oder Vertikalwinkel (oder ein Winkel in einer zur Horizontalebene gedrehten Ebene) aus Sicht der Kamera bestimmt werden. Dabei können dann z.B. Objekt-Daten-Markierungen, deren Position auf einer bestimmten Seite einer durch den Winkel definierten Ebene definiert ist, ein- oder ausgeblendet werden.

Ferner kann erfindungsgemäss das Auswahlkriterium in Abhängigkeit einer aktuellen Entfernungsmessung und/oder einer aktuellen Position einer Fokussierlinse definierbar sein, insbesondere wobei die Position der Fokussierlinse manuell oder automatisch, insbesondere mittels einer AutoFokus-Funktionalität, einstellbar ist. Mittels der Entfernungsmessung zu einem Objekt, z.B. zu einem Prisma oder einer Zielmarke, kann beispielsweise ein Distanzwert ermittelt werden, wobei der Distanzwert als Filterkriterium herangezogen werden kann. Dabei können z.B. Markierungen bzw. Objekt-Daten ein- bzw. ausgeblendet werden, die eine kürzere bzw. höhere Entfernung zur Aufstellposition des Vermessungsgeräts aufweisen oder diejenigen, die in einem bestimmten Toleranzbereich um den gemessenen Entfernungswert liegen. Dies kann insbesondere bei einer fortlaufenden Entfernungsmessung zu einem Ziel erfolgen, wobei dann z.B. nur Objekte innerhalb einer bestimmten Entfernung um das Ziel herum im Bild überlagert werden. Ausserdem ist die Filterung mittels des Auswahlkriteriums durch die aktuelle Position der Fokussierlinse durchführbar. In diesem Zusammenhang kann z.B. ein Objekt im Kamerabild, z.B. ein Baum oder ein Gebäude, durch eine Positionsvariation der Fokuslinse scharf gestellt werden und anhand der resultierenden Linsenposition auf eine Entfernung zu diesem Objekt geschlossen werden. Das Filtern der Daten kann dann im Wesentlichen in Analogie zur Berücksichtigung der Entfernungsmessung bei der Filterung erfolgen.

Insbesondere kann das Auswahlkriterium erfindungsgemäss derart definierbar sein, dass diejenigen Objekt-Daten, die eine durch den jeweiligen Positionsbezugdefinierte Position
- innerhalb eines ersten bezüglich der Aufstellposition des Vermessungsgeräts definierten Distanzbereichs und/oder
- innerhalb eines zweiten bezüglich der Position von bestimmten Objekt-Daten definierten Distanzbereichs und/oder
- innerhalb eines definierten Winkelbereichs, insbesondere wobei der Winkelbereich im Sichtbereich definierbar ist, und/oder
- innerhalb eines im Kamerabild definierten Bildbereichs aufweisen, bei Ausführung der Filterfunktionalität einoder ausblendbar sind.

Zum einen kann somit ein Distanzbereich um die Aufstellposition des Vermessungsgeräts, beispielsweise in Form eines Kreises oder Rings, festgelegt werden, wodurch ein Minimalwert und ein Maximalwert für einen Entfernung zum Vermessungsgerät definiert wird. Zum zweiten kann ein Distanzbereich um die Position einer Markierung für bestimmte Objekt-Daten festgelegt werden. Dabei kann beispielsweise ein Distanzschwellwert oder ebenfalls ein ringförmiger Bereich um diese Position bestimmt werden. Weiters kann ein Winkelbereich beispielsweise durch Definition einer unteren und/oder oberen Grenze für einen Horizontal- und/oder Vertikalwinkel festgelegt werden. Damit kann z.B. ein Kugelsegment mit dem Vermessungsgerät als Mittelpunkt als relevanter Filterbereich definiert werden. Insbesondere kann ein bei der Filterung zu berücksichtigender Bereich durch einen im Kamerabild auswählbaren Bildbereich festgelegt werden. Die genannten Bereiche können z.B. durch eine direkte Markierung der Bereiche im auf dem Display angezeigten Bild (Kamerabild oder Kartenansicht) bestimmt werden, wobei das Display dafür berührungssensitiv ausgebildet sein kann. Insbesondere können die Bereiche auch durch direkte Eingabe z.B. von Minimal- und Maximalwerten oder durch die Festlegung dieser Werte mittels eines Drop-Down-Menüs definiert werden. Im Rahmen der Filterfunktionalität können nun diejenigen Objekt-Daten bzw. deren Markierungen, deren definierte Position innerhalb eines der festgelegten Bereiche liegt, ein- oder ausgeblendet werden. Erfindungsgemäss kann zudem das Auswahlkriterium derart definierbar sein, dass in Abhängigkeit von einer durch einen Körper definierten Körperposition und insbesondere eines Körperausmass ein Teil der Objekt-Daten bei Ausführung der Filterfunktionalität ausblendbar ist, insbesondere wobei die ausgeblendeten Objekt-Daten im Kamerabild aufgrund der Körperposition und des Körperausmasses des Körpers perspektivisch verdeckt sind, insbesondere wobei der Körper durch ein im Kamerabild erfasstes Objekt oder durch ein virtuell vordefiniertes Objekt verkörpert wird. Durch diese Funktion kann insbesondere in einem dargestellten Kamerabild eine bessere Übersicht, z.B. für einen Operator eines erfindungsgemässen Vermessungsgeräts, geschaffen werden, insbesondere dann, wenn durch die Anzeige der Markierungen für die ObjektDaten sich diese zumindest teilweise gegenseitig überlappen oder derart dargestellt sind, dass Objekte im Kamerabild teilweise nicht sichtbar (da verdeckt durch die Markierungen) sind. Die Objekte können beispielsweise im Kamerabild, in der Kartenansicht, durch Eingabe von Koordinaten und/oder durch in einem digitalen Geländemodell gespeicherte Strukturen definiert werden. Wird nun ein Objekt, z.B. ein Gebäude oder eine Geländeformation, im angezeigten Kamerabild (d.h. im Sichtbereich der Kamera) angewählt oder bestimmt, kann mittels der Filterfunktionalität ein Positionsvergleich durchgeführt werden, wobei die Position und gegebenenfalls die Ausdehnung des Objekts mit den jeweiligen im Sichtbereich liegenden Objekt-Daten verglichen werden. Dabei können Objekt-Daten identifiziert werden, deren Markierungen perspektivisch (aus Sicht der Kamera des Vermessungsgeräts) hinter oder in einem Objekt liegen und somit z.B. für einen Benutzer nicht sichtbar sind. Derartige Markierungen oder Informationen zu Objekt-Daten können dann aus dem Kamerabild ausgeblendet werden.

Ferner kann das Auswahlkriterium erfindungsgemäss mittels des Kamerabilds, mittels einer Draufsicht-Darstellung mit den darin dargestellten Objekt-Daten, insbesondere mittels einer Kartendarstellung, und/oder durch Eingabe von Information mittels einer Eingabeeinheit, insbesondere Positionsinformation, definierbar sein. So kann das jeweilige Auswahlkriterium beispielsweise mittels einer Berührung des berührungssensitiv ausgebildeten Displays definiert werden, während auf dem Display das Kamerabild angezeigt wird. Dabei können die Position der Berührung koordinativ mit dem Koordinatensystem verknüpft werden und dadurch für das Auswahlkriterium festzulegende Bereiche direkt im Koordinatensystem definiert werden. Analog hierzu kann eine koordinatenbasierte Definition hinsichtlich des Auswahlkriteriums auch mittels einer Kartenansicht, d.h. einer Darstellung der gemäss dem Kamerabild erfassten Umgebung in Vogelperspektive, erfolgen. Auch hier können durch Antippen des Displays Objekte für die Bestimmung des Auswahlkriteriums markiert werden. Ausserdem kann eine Eingabe von für die Definition des Auswahlkriteriums notwendigen Informationen durch eine Eingabe von Daten erfolgen, wobei die Daten z.B. mittels einer Tastatur, via einer Funk-, Bluetooth-, Infrarot- und/oder WLAN-Schnittstelle übertragbar sind.

Insbesondere kann die Filterfunktionalität des erfindungsgemässen Vermessungsgeräts automatisch ausgeführt werden, insbesondere in Abhängigkeit einer vorbekannten Messanforderung. Somit kann die Filterfunktionalität beispielsweise einer Messaufgabe angepasst werden und basierend auf den für die jeweilige Aufgabe erforderlichen Informationen eine automatisierte Filterung erfolgen. Diese Funktion kann für einen Operator einer Totalstation stark messerleichternd dadurch sein, dass dieser nicht manuell ein Herausfiltern von ungewünschter Information vornehmen muss. Beispielsweise können in diesem Zusammenhang bei einer durchzuführenden Absteckung eines Gebäuderundrisses nur diejenigen Markierungen für Objekt-Daten eingeblendet werden, welche einen (vordefinierten) Bezug zu diesem Gebäude aufweisen, und jene Markierungen ausgeblendet werden, die zwar ebenfalls im Sichtfeld der Kamera liegen, aber nicht dem Absteckprozess zuzuordnen sind, z.B. Markierungen einer Kirchturmspitze oder eines Gipfelkreuzes im Hintergrund.

Die Erfindung betrifft ferner ein Verfahren zum gefilterten Darstellen von in einer Datenbank eines geodätischen Vermessungsgeräts mit einem jeweiligen eine Position in einem Koordinatensystem angebenden Positionsbezug, gespeicherten Objekt-Daten, wobei das Vermessungsgerät in ein Koordinatensystem einmessbar ist, sodass in einem eingemessenen Zustand eine Aufstellposition und eine Ausrichtung des Vermessungsgeräts bekannt sind. Im Rahmen des Verfahrens erfolgen ein Erfassen eines Kamerabilds mit einer Kamera mit einem aktuellen Sichtbereich, und ein Darstellen des Kamerabilds und der Objekt-Daten auf einer grafischen Ausgabeeinheit. Zudem erfolgen ein dynamisches Filtern, wobei im Rahmen des dynamischen Filterns die Objekt-Daten in Abhängigkeit des aktuellen Sichtbereichs gefiltert werden, und ein statisches Filtern, wobei im Rahmen des statischen Filterns die Objekt-Daten in Abhängigkeit eines benutzerseitig wählbaren oder vorgebbaren Auswahlkriteriums gefiltert werden, wobei das Auswahlkriterium von einer Positionsrelation, einer Winkelrelation, einer Objekteigenschaft und/oder einer vom Vermessungsgerät bereitgestellten Information abhängt. Ausserdem werden nur die durch das dynamische und statische Filtern gefilterten Objekt-Daten mittels die Objekt-Daten repräsentierender Markierungen zusammen mit dem Kamerabild grafisch auf der Ausgabeeinheit dargestellt, wobei die Markierungen an einer jeweiligen durch den Positionsbezug referenzierten Stelle im Kamerabild dargestellt werden. Weitere Ausführungsformen bzw. Weiterbildungen des erfindungsgemässen Verfahrens sind in den abhängigen Ansprüchen bzw. oben bereits als Weiterbildungen des erfindungsgemässen Vermessungsgeräts analog beschrieben und diesen zu entnehmen.

Insbesondere kann im Rahmen des erfindungsgemässen Verfahrens das Filtern und Darstellen der Objekt-Daten automatisch erfolgen, insbesondere in Abhängigkeit einer vorbekannten Messanforderung.

Ferner kann erfindungsgemäss das Filtern in Abhängigkeit von einem Distanzschwellwert und/oder Winkelschwellwert erfolgen.

Ausserdem kann das Auswahlkriterium erfindungsgemäss derart definiert werden, dass die Objekt-Daten, die eine durch den jeweiligen Positionsbezugdefinierte Position
- innerhalb eines ersten bezüglich der Aufstellposition des Vermessungsgeräts definierten Distanzbereichs und/oder
- innerhalb eines zweiten bezüglich der Position von bestimmten Objekt-Daten definierten Distanzbereichs und/oder
- innerhalb eines definierten Winkelbereichs, insbesondere wobei der Winkelbereich im Sichtbereich definierbar ist, und/oder
- innerhalb eines im Kamerabild definierten Bildbereichs aufweisen, ein- oder ausgeblendet werden.

Erfindungsgemäss kann in Abhängigkeit von einer Körperposition und insbesondere von einem Körperausmass eines Körpers ein Teil der Objekt-Daten beim Filtern ausgeblendet werden, insbesondere wobei die ausgeblendeten Objekt-Daten aufgrund der Körperposition und des Körperausmasses des Körpers im Kamerabild perspektivisch verdeckt werden.

Weiters kann im Rahmen der Erfindung das Filtern in Abhängigkeit von einer aktuellen Entfernungsmessung und/oder von einer aktuellen Position einer Fokussierlinse erfolgen, insbesondere wobei die Position der Fokussierlinse manuell oder automatisch, insbesondere mittels einer Auto-Fokussierung, eingestellt wird.

Darüber hinaus kann das Auswahlkriterium erfindungsgemäss mittels des Kamerabilds, mittels einer Draufsicht-Darstellung mit den darin dargestellten Objekt-Daten, insbesondere mittels einer Kartendarstellung, und/oder durch Eingabe von Information mittels einer Eingabeeinheit, insbesondere Positionsinformation, definiert werden.

Die Erfindung betrifft ferner ein Computerprogrammprodukt mit Programmcode, der auf einem maschinenlesbaren Träger gespeichert ist und/oder ausgeführt wird, zur Durchführung eines erfindungsgemässen Verfahrens zum gefilterten Darstellen von Objekt-Daten, insbesondere wenn das Programm auf einer als Steuerungs- und Verarbeitungseinheit eines erfindungsgemässen geodätischen Vermessungsgeräts ausgebildeten elektronischen Datenverarbeitungseinheit ausgeführt wird.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1a-b: jeweils eine Darstellung von Markierungen für Objekt-Daten zum einen in Überlagerung mit einem Kamerabild und zum anderen in einer Draufsicht-Darstellung;
- Fig.2a: eine erfindungsgemässe gefilterte Darstellung von Objekt-Daten repräsentierenden Markierungen in einem Kamerabild;
- Fig.2b: eine erfindungsgemässe Definition des Auswahlkriteriums zur Filterung der Objekt-Daten in einer Kartenansicht;
- Fig.3: eine erfindungsgemässe Definition mehrerer Distanzbereiche und Darstellung von Objekt-Information;
- Fig.4a-b: eine weitere erfindungsgemässe Definition des Auswahlkriteriums zur Filterung der Objekt-Daten in einer Kartenansicht und eine weitere erfindungsgemässe gefilterte Darstellung von Markierungen für die Objekt-Daten in einem Kamerabild;
- Fig.5: eine weitere erfindungsgemässe gefilterte Darstellung von Objekt-Daten in einem Kamerabild;
- Fig.6: eine erfindungsgemässe Definition eines Winkelbereichs zur Filterung der Objekt-Daten;
- Fig.7: eine weitere erfindungsgemässe Definition eines Winkelbereichs zur Filterung der Objekt-Daten;
- Fig.8a-c: eine weitere erfindungsgemässe Definition des Auswahlkriteriums zur Filterung der Objekt-Daten; und
- Fig.9a-c: eine weitere erfindungsgemässe Ausführung der Definition des Auswahlkriteriums zur Filterung der Objekt-Daten.

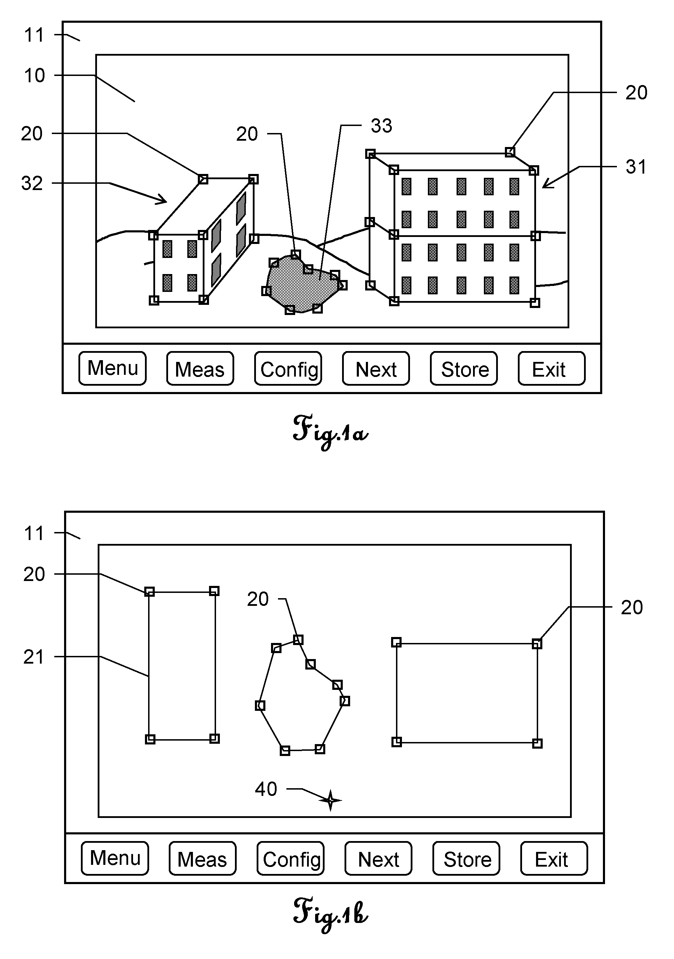

Die Figuren 1a, 1b zeigen jeweils eine Darstellung von Markierungen 20 für Objekt-Daten. In Figur 1a sind diese Markierungen 20 in einem Kamerabild 10 überlagert dargestellt wohingegen in Figur 1b nur die Markierungen 20 zusammen mit einer Position 40 eines Vermessungsgeräts in einer Kartendarstellung gezeigt sind. Beide Darstellungen werden auf einem Display 11 eines Vermessungsgeräts ausgegeben. Die Markierungen 20 der Objekt-Daten repräsentieren jeweils signifikante Punkte oder Grundrisse 21 von Gebäuden 31,32 oder zeigen Punkte an weiteren mit einer Kamera erfassten Objekten, wie beispielsweise Punkte an der Uferlinie eines Sees 33. Solche Positionsinformationen können beispielsweise in der Landschaftsvermessung oder bei einer Überwachung von Baufortschritten herangezogen werden, um z.B. eine Positionierung von Bauelemente auszuführen bzw. zu überprüfen. Ein Benutzer eines erfindungsgemässen Vermessungsgeräts kann dabei eine im Vorfeld der Messung definierte Position für einen Gegenstand im Kamerabild 10 identifizieren und eine reale Position des Gegenstands mit der festgelegten vergleichen. Ausserdem kann der Benutzer sich Informationen über geplante Bauabschnitte einblenden lassen, z.B. den Verlauf einer geplanten Strasse, oder auch Information zu bereits bestehenden Objekten anzeigen lassen.

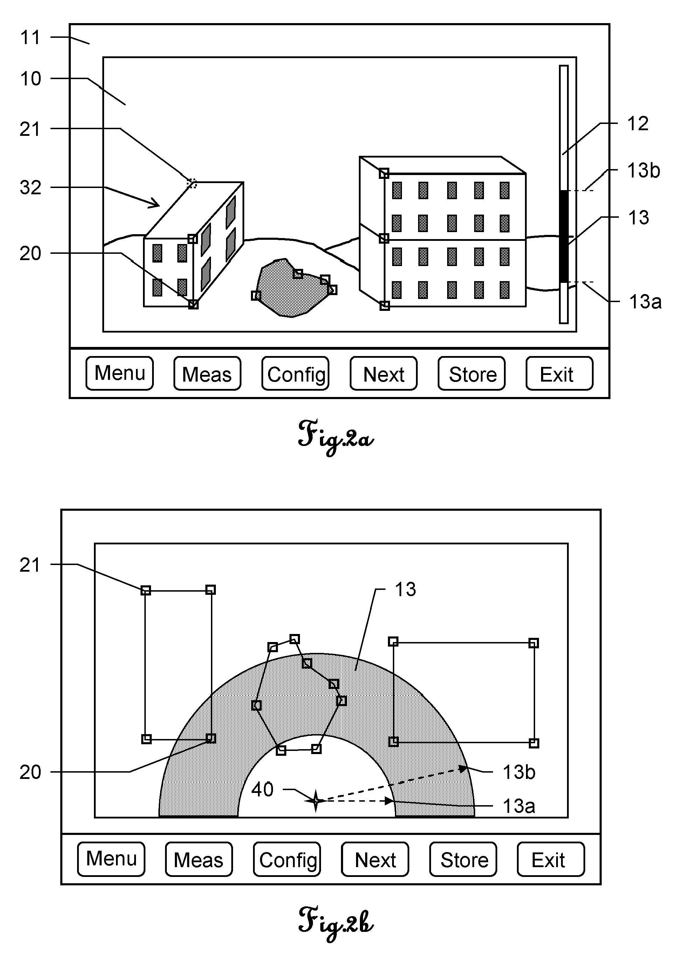

Figur 2a zeigt eine erfindungsgemässe gefilterte Darstellung von Objekt-Daten in einem Kamerabild 10, wobei das Kamerabild 10 und die Markierungen 20,21 der ObjektDaten auf einem Display 11 eines erfindungsgemässen Vermessungsgeräts dargestellt sind. Am rechten Rand des Kamerabilds 10 ist ein Balken 12 gezeigt. Der Balken 12 zeigt zudem einen Bereich 13, welcher einen Distanzbereich für eine Filterung der Objekt-Daten repräsentieren kann. In der gezeigten Ausführung können beispielsweise alle ObjektDaten-Markierungen 20 im Kamerabild 10 eingeblendet sein, die einen gewählten Mindestabstand 13a zu einer Totalstation von z.B. 15 Metern und einen maximalen Abstand 13b von z.B. 25 Metern aufweisen. Der Distanzbereich 13 kann dabei insbesondere durch die Eingabe von Bereichsgrenzen oder mittels einer Definition der Bereichsgrenzen auf einer als berührungssensitives Display ausgebildeten Ausgabeeinheit durch Berührung definiert werden. So kann der Bereich 13 im Balken 12 z.B. mit einem Stift verschoben oder dessen Grösse und damit gleichzeitig der Distanzbereich 13 verändert werden. Beispielhaft ist ferner ein Positionssymbol 21 zu einem Eckpunkt des Gebäudes 32 gestrichelt gezeigt, welche sich ausserhalb des definierten Distanzbereichs 13 befindet und ausgeblendet ist.

Figur 2b zeigt eine erfindungsgemässe Definition des Auswahlkriteriums zur Filterung der durch Symbole bzw. Markierungen 20,21 repräsentierten Objekt-Daten in einer Kartenansicht. In Analogie zu Figur 2a wird hier ein Distanzbereich 13 so gewählt, dass die Markierungen 21 der Objekt-Daten, deren Position einen kleineren Abstand zur Aufstellposition 40 des Vermessungsgerät aufweist als der Mindestabstand 13a des Distanzbereichs 13 beträgt oder die weiter davon entfernt sind als der Maximalabstand 13b des Distanzbereichs 13, ausserhalb des Distanzbereichs 13 liegen und somit, insbesondere benutzerdefiniert, ein- bzw. ausgeblendet werden können. Diejenigen Markierungen 20, die sich aufgrund ihrer durch den Positionsbezug bzw. Positionskoordinaten angegebenen Position innerhalb des Distanzbereichs 13 befinden, können ebenfalls entweder einoder ausgeblendet werden. Mit einer entsprechenden Bestimmung eines Distanzbereichs 13 können somit ObjektDaten gezielt ausgeblendet oder ausschliesslich eingeblendet werden. Zudem können mehrere solcher Distanzbereiche 13 in einem Kamerabild oder einer Kartenansicht definiert werden, wobei analog die eingeschlossenen Daten ein- und/oder ausblendbar sind.

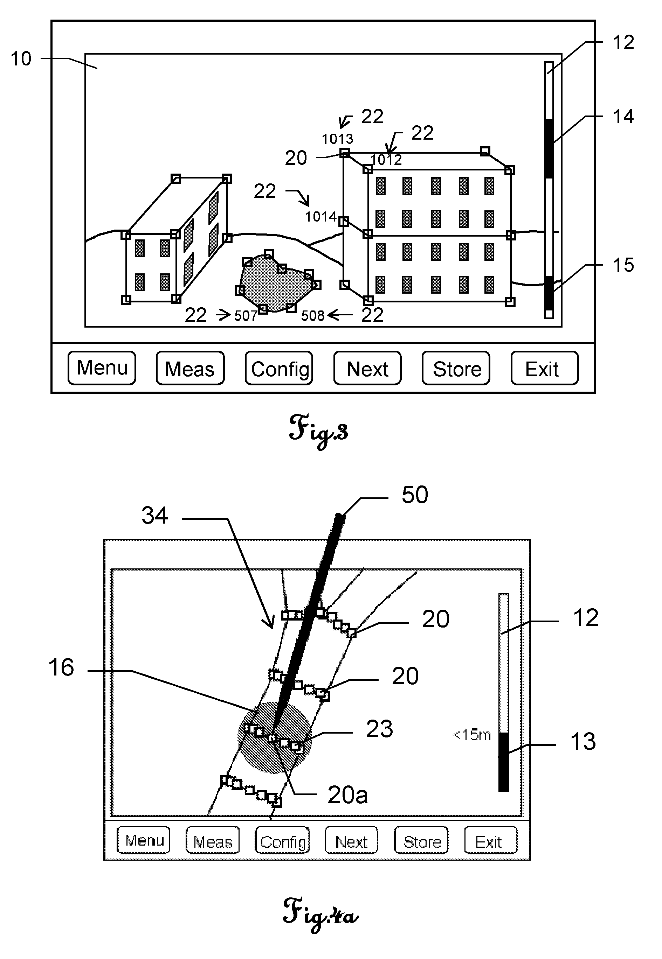

Figur 3 zeigt eine derartige Definition mehrerer Distanzbereiche 14,15 mittels eines im Kamerabild 10 angezeigten Balkens 12. In dieser erfindungsgemässen Ausführungsform betrifft die mittels der Distanzbereiche 14,15 definierte Filterung nicht die positionsbezogene Darstellung der Objekt-Daten selbst, sondern die Darstellung von zu den jeweiligen Objekt-Daten zugeordneten Informationen 22. Damit können beispielsweise Identifikationsnummern oder absolute Positionsangaben zu den Markierungen 20 für die Objekt-Daten in Abhängigkeit der jeweiligen Entfernung zum Vermessungsgerät ein- oder ausgeblendet werden.

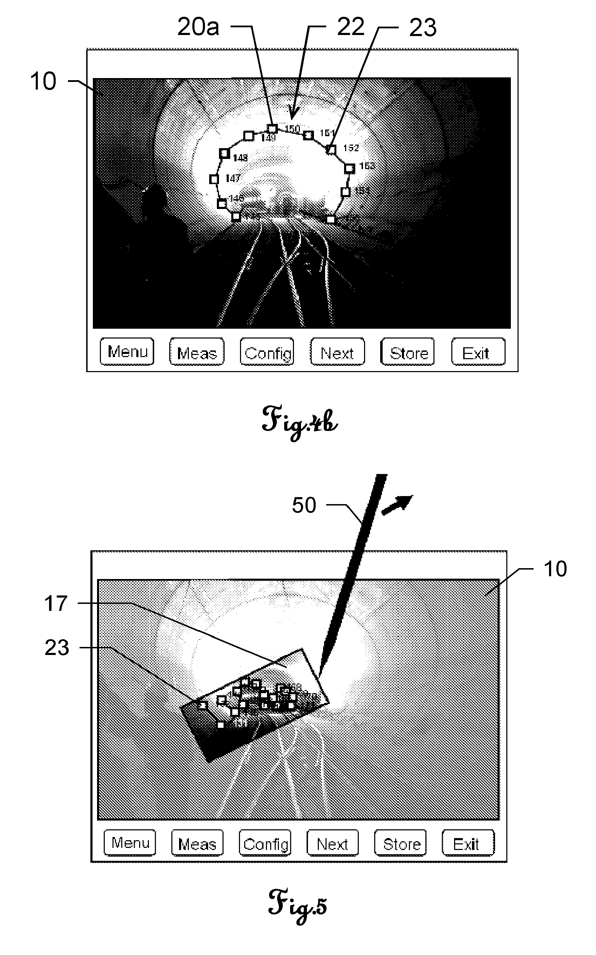

Die Figuren 4a,4b zeigen eine weitere erfindungsgemässe Definition des Auswahlkriteriums zur Filterung der Markierungen 20,23 der Objekt-Daten in einer Kartenansicht und eine korrespondierende erfindungsgemässe gefilterte Darstellung der Markierungen 23 der Objekt-Daten in einem Kamerabild 10. Die Kartenansicht oder Draufsicht-Darstellung (in Vogelperspektive) der Figur 4a zeigt einen Verlauf eines Tunnels 34 mit über den Tunnelverlauf gespeicherten Objekt-Daten repräsentierenden Markierungen 20,23. Am Rand der Kartenansicht ist der Balken 12 dargestellt, der zur Einstellung eines Distanzbereichs 16, insbesondere mittels variablen Radius des Bereichs 16 um einen definierbaren Mittelpunkt oder durch Definition einer Grösse eines Auswahlbereichs, dient. Die Wahl des Bereichs 16 bzw. des Radius kann z.B. durch Eingabe einer bestimmten Wertes oder durch Berühren des Touchdisplays (und ziehen auf dem Display), insbesondere mit einem Stift oder einem dafür vorgesehenen Zeigegerät 50, erfolgen. Zum Setzen des Mittelpunkts oder eines Bezugspunkts für den Distanz- bzw. Auswahlbereich 16 kann ebenfalls eine Eingabe oder ein Berühren des Displays mit dem Zeigegerät 50 an einem Punkt oder das Berühren oder Auswählen einer bestimmten angezeigten Markierung 20a für eine Objekt-Information (= Mittelpunkt bzw. Bezugspunkt) erfolgen. Der Distanzbereich 16 kann dann z.B. in Abhängigkeit der Einstellung am Balken 12 gesetzt und durch eine Änderung dieser Einstellung variiert werden. In Figur 4b ist das Ergebnis der in Figur 4a eingestellten Daten-Filterung in einer Kameraansicht gezeigt. Dabei werden auf dem Kamerabild 10 diejenigen Objekt-Daten-Markierungen 23 dargestellt, die innerhalb des Distanzbereichs 16 um den ausgewählten Punkt 20a liegen. Zusätzlich sind weitere Objekt-Informationen 22 zu den Markierungen 23 der Objekt-Daten angezeigt. Das Ausmass des Distanzbereichs 16 und ein Bezugspunkt zu dem Bereich können insbesondere auch im Kamerabild 10 definiert werden, wobei wiederum mit dem Zeigegerät 50 auf das Bild getippt und dadurch die Grösse und Position des Bereichs 16 bestimmt werden kann.

Figur 5 zeigt eine weitere erfindungsgemässe gefilterte Darstellung von Objekt-Daten anzeigenden Markierungen 23 in einem Kamerabild 10. Hierbei kann ein Auswahlbereich 17 definiert werden, wobei der Bereich 17 mittels des Zeigegeräts 50 im Kamerabild 10 platziert und bezüglich seiner Grösse variiert werden kann. Innerhalb bzw. ausserhalb des Bereichs 17 können dann die jeweiligen Markierungen 23 angezeigt oder ausgeblendet werden. Dieser Bereich 17 kann an einer festen Position im Kamerabild 10 definiert werden. Somit können beispielsweise bei einer Drehung des Vermessungssystems fortlaufend diejenigen Markierungen 23 im Auswahlbereich 17 angezeigt werden, die aktuell im Kamerabild 10 und innerhalb des Bereichs 17 liegen. Jene Markierungen 23, die bei der Drehung aus dem Bereich 17 rutschen können entsprechend ausgeblendet werden.

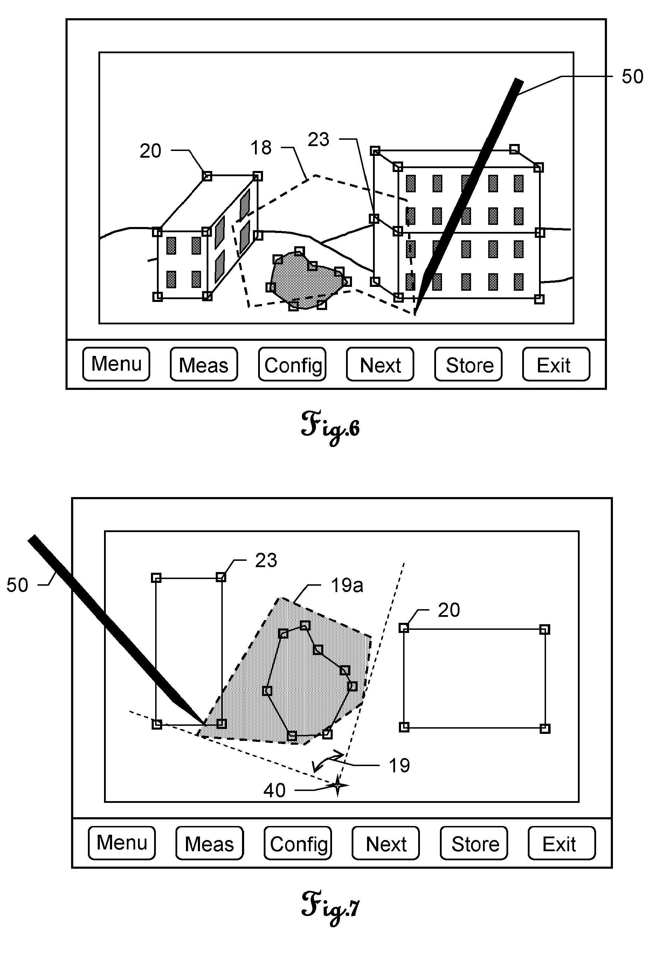

Figur 6 zeigt eine erfindungsgemässe Definition eines Winkelbereichs zur Filterung der Objekt-Daten. Im Kamerabild 10 kann hierbei - insbesondere mittels des Zeigegeräts 50 - ein Bereich 18 definiert werden, durch den ein Winkelbereich, sowohl horizontal als auch vertikal, bezüglich der Position des Vermessungsgeräts definiert wird. Der Winkelbereich kann hierbei z.B. durch die horizontal und vertikal äussersten Punkte des Bereichs 18 definiert sein. Die Filterung der Objekt-Daten kann dann analog zur Definition eines Distanzbereichs erfolgen, d.h. Objekt-Daten, die innerhalb des Bereichs 18 liegen können mittels Markierungen 23 ein- oder ausgeblendet werden. Die Definition der Winkelbereiche kann ausserdem durch Eingabe eines maximalen und/oder minimalen Horizontalwinkels und/oder eines maximalen und/oder minimalen Vertikalwinkels erfolgen. Auch dabei kann gewählt werden ob die Markierungen 20,23 der Objekt-Daten, die sich innerhalb oder ausserhalb des Bereichs (bzw. unterhalb oder oberhalb eines vorgegebenen Winkels) befinden eingeblendet werden.

Figur 7 zeigt eine weitere erfindungsgemässe Definition eines Winkelbereichs 19 in einer Kartenansicht zur Filterung der Objekt-Daten bzw. deren Markierungen 20,23. Dabei kann mit einem Stift 50 in der Kartendarstellung ein Bereich 19a bestimmt werden, durch den der Winkelbereich 19 bezüglich der Position 40 des Vermessungsgeräts definiert wird. Dieser Bereich 19 wird in der gezeigten Ausführung in horizontaler Richtung definiert. Ein korrespondierender Horizontalbereich kann, insbesondere automatisch, aus dem gespeicherten Positionsbezug der im Winkelbereich 19 liegenden Markierungen 23 abgeleitet und definiert werden. Insbesondere können bei einer derartigen Definition eines Bereichs 19a auch z.B. nur diejenigen Objekt-Daten ausgeblendet werden, die in der Kartenansicht innerhalb des Bereichs 19a liegen, ohne dass ein Winkelbereich 19 definiert wird.

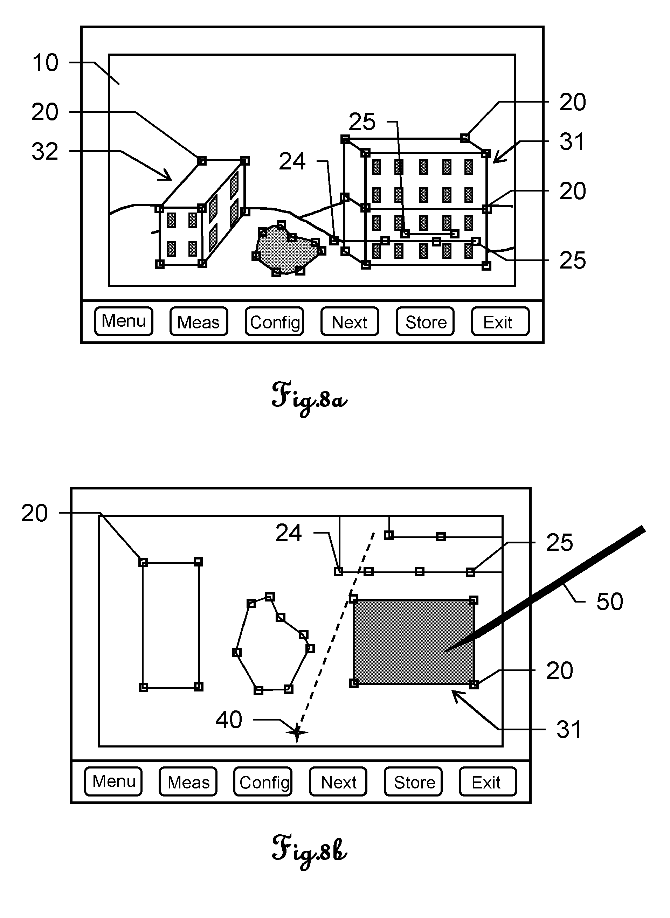

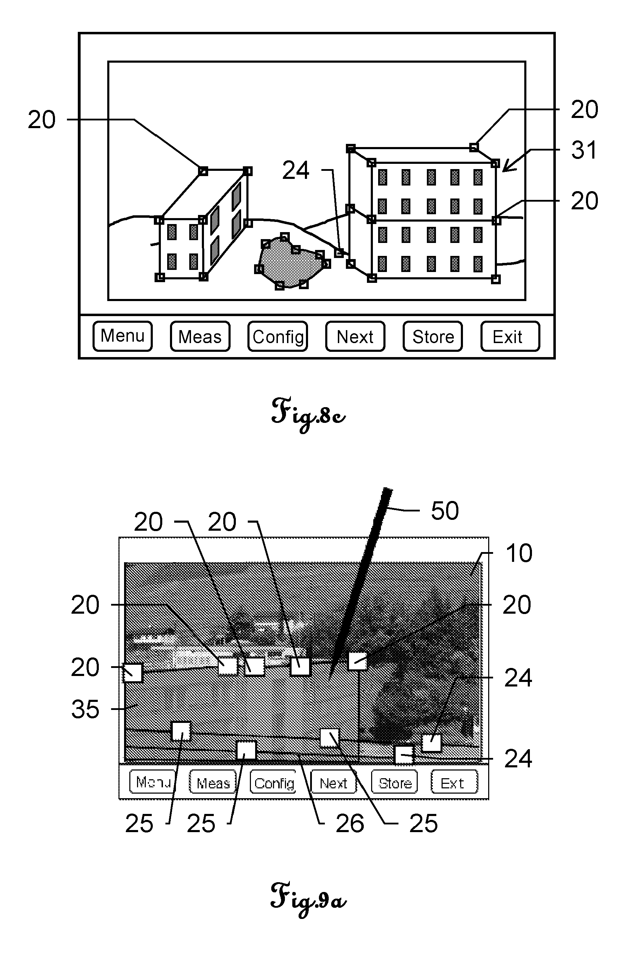

Die Figuren 8a-c zeigen eine weitere erfindungsgemässe Ausführung des Auswahlkriteriums zur Filterung der ObjektDaten und deren graphischer Darstellung als Markierungen 20,24,25. Die Figuren zeigen dabei jeweils zwei Gebäude 31,32 (bzw. deren Grundrisse in Figur 8b) und zu den Gebäuden gehörige Objekt-Daten-Markierungen 20. In Figur 8a sind zudem Markierungen 24 und 25 im Kamerabild 10 dargestellt, wobei diese und deren Verbindungslinien mit der Darstellung des Gebäudes 31 überlappen. Derartige Objekt-Daten (zu Markierungen 24,25) können zwar in einer Datenbank des Vermessungsgeräts gespeichert sein, jedoch werden diese beispielsweise ohne eine weitere Filterung zusammen mit im Bild 10 erfassten Gebäuden 31,32 und mit weiteren Objekt-Daten-Markierungen 20 dargestellt (wie gezeigt). Dabei wird eine real-perspektivische Darstellung der Markierungen 20,24,25 nicht bereitgestellt, d.h. Objektdaten 25, die von dem Gebäude 31 perspektivisch - aus Sicht der Kamera - verdeckt würden, werden trotz ihrer eigentlichen Verdeckung eingeblendet. In Figur 8b werden die Objekt-Daten wiederum in einer Kartendarstellung mittels der Markierungen 20,24,25 gezeigt. Zudem ist die Position 40 einer Totalstation dargestellt. Zur Filterung derjenigen Markierungen 25, die in dem Kamerabild 10 aus Figur 8a perspektivisch (für einen Benutzer des Vermessungssystems) nicht sichtbar sind, wird nun in der Kartenansicht der Grundriss des Gebäudes 31 mit einem Zeigegerät 50 angewählt und dadurch das Gebäude 31 als Sichthindernis markiert. Durch eine Vergleich der zu den jeweiligen Objekt-Daten hinterlegen Positionsinformationen kann - unter Berücksichtigung der relativen Positionierung 40 der Totalstation - eine Filterung der Objekt-Daten- Markierungen 20,24,25 derart erfolgen, dass diejenigen Markierung 25, die durch die Position und gegebenenfalls die Ausdehnung des Gebäudes 31, verdeckt werden, ausgeblendet werden. Die Position und die Ausdehnung des Gebäudes 31 kann dabei aus den zu diesem Gebäude 31 zugeordneten Objekt-Daten (Markierungen 20) abgeleitet werden. Ferner kann ein Hindernis (hier: Gebäude 31) auch im Kamerabild 10 direkt, beispielsweise ebenfalls durch Antippen mit einem Stift, definiert werden. Die Figur 8c zeigt eine Kameradarstellung der Messsituation nach Filterung ohne die Darstellung der verdeckten ObjektDaten-Markierungen 25, wobei die Markierung 24 noch dargestellt wird, die Verbindungslinie zum nächsten Punkt jedoch an einer Kante des Gebäudes 31 abgeschnitten erscheint.

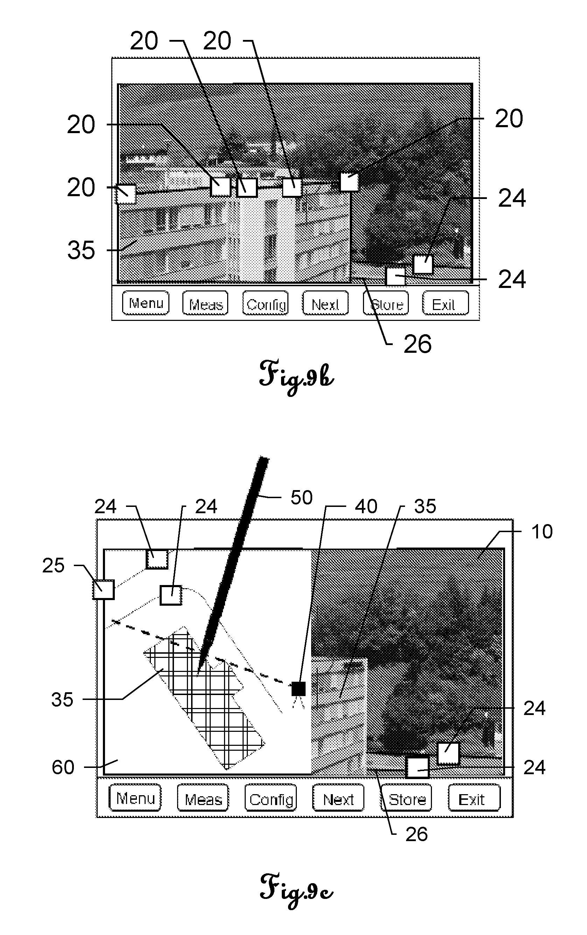

Die Figuren 9a-c zeigen eine weitere erfindungsgemässe Ausführung zur Definition des Auswahlkriteriums zur Filterung der Objekt-Daten bzw. der Markierungen 20,24,25,26. Figur9a zeigt in diesem Zusammenhang ein Kamerabild 10, in dem ein Gebäude 35 und die Markierungen 20,24,25,26 dargestellt sind. Zudem ist ein Stift 50 gezeigt, mit welchem z.B. ein Benutzer mittels Berührens des Kamerabilds 10 eine Eingabe tätigen kann. Durch den Stift 50 wird hier zur Filterung der ObjektDaten-Markierungen 20,24,25,26 - beispielsweise damit dem Benutzer eine bessere Übersicht über relevante Daten angeboten werden kann - das Gebäude 35 markiert. Mittels der erfindungsgemässen Filterfunktion können nun Positionsvergleiche der Objekt-Daten 20,24,25,26 sowohl untereinander als auch mit der Position und der Ausdehnung des Gebäudes 35 vorgenommen werden. Die Gebäudeposition und -grösse kann dabei z.B. durch die Positionen der ObjektDaten (zu Markierungen 20) bestimmt werden. Bei dem Vergleich der Gebäudeposition mit den Objekt-Daten kann nun festgestellt werden, dass die Objekt-Daten-Markierungen 25 und 26 zumindest teilweise aus Sicht der Kamera (mit der das Kamerabild 10 erfasst wurde) bzw. des Vermessungsgeräts durch die Fassade des Gebäudes 35 verdeckt sind. In Folge können nun, insbesondere automatisiert im Rahmen der Filterfunktionalität, die verdeckten Objekt-Daten-Markierungen 25 und 26 ausgeblendet werden und nur diejenigen Markierungen 20,24 und 26 (teilweise) - zusammen mit dem Gebäude 35 - dargestellt werden, die aus Sicht der Kamera des Vermessungsgeräts sichtbar sind. Dieses Resultat der Filterung ist in Figur 9b gezeigt.

Eine entsprechende Markierung eines Hindernisses kann insbesondere auch in einer Kartenansicht 60 gemäss Figur 9c erfolgen, wobei die Positionen der Markierungen 20,24,25,26 der Objekt-Daten und des Gebäudes 35 eines aufgenommenen Kamerabilds 10 korrespondierend in der Kartenansicht 60 in einer Hälfte des Displays dargestellt werden. In dieser Kartenansicht 60 ist zudem die Position 40 des Vermessungsgeräts und somit der Kamera angezeigt. Das Gebäude 35, das hier eine perspektivische Verdeckung der Objekt-Daten-Markierung 25 aus Sicht der Kamera bewirkt, kann in dieser Ansicht 60 wiederum mit einem Stift 50 markiert oder mittels einer Eingabe z.B. auf einer Tastatur des Vermessungsgeräts definiert werden. Durch das Markieren des Gebäudes 35 kann dieses als Hindernis kenntlich gemacht werden und folglich können jene Markierungen 25 mittels der erfindungsgemässen Filterfunktionalität ausgeblendet werden, welche durch das Gebäude 35 verdeckt sind. Als Ergebnis des Filterns wird in der zweiten Hälfte des Displays das Kamerabild 10 gezeigt, wobei dort ausschliesslich die Markierungen 24,26 für die Objekt-Daten noch dargestellt werden, die nicht verdeckt sind.

Es versteht sich, dass diese dargestellten Figuren nur mögliche Ausführungsbeispiele schematisch darstellen. Die verschiedenen Ansätze können erfindungsgemäss ebenso miteinander sowie mit Verfahren und Vorrichtungen zur Vermessung des Stands der Technik kombiniert werden.

## Patentansprüche

1. Geodätisches Vermessungsgerät, insbesondere Totalstation oder Theodolit, einmessbar in ein Koordinatensystem, sodass in einem eingemessenen Zustand eine Aufstellposition (40) und eine Ausrichtung des Vermessungsgeräts bekannt sind, mit zumindest
• einer um zwei Achsen schwenkbaren Anzieleinheit, insbesondere Fernrohr, wobei die Anzieleinheit
□ eine Anzielrichtung im Koordinatensystem definiert und
□ eine Kamera aufweist mit einem aktuellen
Sichtbereich zur Erfassung eines Kamerabilds (10) im Wesentlichen in Anzielrichtung, wobei der Sichtbereich in Abhängigkeit der Anzielrichtung aktualisierbar ist,
• einer Winkel- und Entfernungsmessfunktionalität,
• in einer Datenbank gespeicherten Objekt-Daten, wobei die Objekt-Daten mit einem jeweiligen eine Position im Koordinatensystem angebenden Positionsbezug gespeichert sind, insbesondere Objektkoordinaten,
• einer grafischen Ausgabeeinheit (11) auf der das Kamerabild (10) und die Objekt-Daten darstellbar sind, und
• einer Steuerungs- und Verarbeitungseinheit,
**dadurch gekennzeichnet, dass**
das Vermessungsgerät eine Filterfunktionalität aufweist, in deren Rahmen bei Ausführung der Filterfunktionalität automatisch gesteuert durch die Steuerungs- und Verarbeitungseinheit
• ein dynamisches Filtern erfolgt, wobei im Rahmen des dynamischen Filterns die Objekt-Daten in Abhängigkeit des aktuellen Sichtbereichs gefiltert werden,
• ein statisches Filtern erfolgt, wobei im Rahmen des statischen Filterns die Objekt-Daten in Abhängigkeit eines benutzerseitig wählbaren oder vorgebbaren Auswahlkriteriums gefiltert werden, wobei das Auswahlkriterium von einer Positionsrelation, einer Winkelrelation, einer Objekteigenschaft und/oder einer vom Vermessungsgerät bereitgestellten Information abhängt, und
• nur die durch das dynamische und statische Filtern gefilterten Objekt-Daten mittels die Objekt-Daten repräsentierender Markierungen (20,21,22,23,24,25,26) zusammen mit dem Kamerabild (10) grafisch auf der Ausgabeeinheit (11) dargestellt werden, wobei die Markierungen (20,21,22,23,24,25,26) an einer jeweiligen durch den Positionsbezug referenzierten Stelle im Kamerabild (10) dargestellt werden.

2. Geodätisches Vermessungsgerät nach Anspruch 1,
**dadurch gekennzeichnet, dass**
das Auswahlkriterium in Abhängigkeit eines Distanzschwellwerts (13a,13b) und/oder Winkelschwellwerts definierbar ist.

3. Geodätisches Vermessungsgerät nach Anspruch 1 oder 2, **dadurch gekennzeichnet, dass**
das Auswahlkriterium in Abhängigkeit
• einer aktuellen Entfernungsmessung und/oder
• einer aktuellen Position einer Fokussierlinse definierbar ist,
insbesondere wobei die Position der Fokussierlinse manuell oder automatisch, insbesondere mittels einer Auto-Fokus-Funktionalität, einstellbar ist.

4. Geodätisches Vermessungsgerät nach einem der Ansprüche 1 bis 3,
**dadurch gekennzeichnet, dass**
das Auswahlkriterium derart definierbar ist, dass diejenigen Objekt-Daten, die eine durch den jeweiligen Positionsbezugdefinierte Position
• innerhalb eines ersten bezüglich der Aufstellposition (40) des Vermessungsgeräts definierten Distanzbereichs (13,14,15) und/oder
• innerhalb eines zweiten bezüglich der Position von bestimmten Objekt-Daten (20a) definierten Distanzbereichs (16) und/oder
• innerhalb eines definierten Winkelbereichs (19), insbesondere wobei der Winkelbereich (19) im Sichtbereich definierbar ist, und/oder
• innerhalb eines im Kamerabild (10) definierten Bildbereichs (17)
aufweisen, bei Ausführung der Filterfunktionalität einoder ausblendbar sind.

5. Geodätisches Vermessungsgerät nach einem der Ansprüche 1 bis 4,
**dadurch gekennzeichnet, dass**
das Auswahlkriterium derart definierbar ist, dass in Abhängigkeit von einer durch einen Körper (31,32,33,34,35) definierten Körperposition und insbesondere in Abhängigkeit von einem Körperausmass ein Teil der Objekt-Daten bei Ausführung der Filterfunktionalität ausblendbar ist, insbesondere wobei die ausgeblendeten Objekt-Daten im Kamerabild (10) aufgrund der Körperposition und des Körperausmasses des Körpers (31,32,33,34,35) perspektivisch verdeckt sind, insbesondere wobei der Körper (31,32,33,34,35) durch ein im Kamerabild (10) erfasstes Objekt oder durch ein virtuell vordefiniertes Objekt verkörpert wird.

6. Geodätisches Vermessungsgerät nach einem der Ansprüche 1 bis 5,
**dadurch gekennzeichnet, dass**
das Auswahlkriterium mittels des Kamerabilds (10), mittels einer Draufsicht-Darstellung (60) mit den darin dargestellten Objekt-Daten, insbesondere mittels einer Kartendarstellung, und/oder durch Eingabe von Information mittels einer Eingabeeinheit, insbesondere Positionsinformation, definierbar ist.

7. Geodätisches Vermessungsgerät nach einem der Ansprüche 1 bis 6,
**dadurch gekennzeichnet, dass**
die Filterfunktionalität automatisch ausgeführt wird, insbesondere in Abhängigkeit einer vorbekannten Messanforderung.

8. Verfahren zum gefilterten Darstellen von in einer Datenbank eines geodätischen Vermessungsgeräts mit einem jeweiligen eine Position in einem Koordinatensystem angebenden Positionsbezug, gespeicherten Objekt-Daten, wobei das Vermessungsgerät in ein Koordinatensystem einmessbar ist, sodass in einem eingemessenen Zustand eine Aufstellposition (40) und eine Ausrichtung des Vermessungsgeräts bekannt sind, mit
• einem Erfassen eines Kamerabilds (10) mit einer Kamera mit einem aktuellen Sichtbereich, und
• einem Darstellen des Kamerabilds (10) und der ObjektDaten auf einer grafischen Ausgabeeinheit (11),
**dadurch gekennzeichnet, dass**
• ein dynamisches Filtern erfolgt, wobei im Rahmen des dynamischen Filterns die Objekt-Daten in Abhängigkeit des aktuellen Sichtbereichs gefiltert werden,
• ein statisches Filtern erfolgt, wobei im Rahmen des statischen Filterns die Objekt-Daten in Abhängigkeit eines benutzerseitig wählbaren oder vorgebbaren Auswahlkriteriums gefiltert werden, wobei das Auswahlkriterium von einer Positionsrelation, einer Winkelrelation, einer Objekteigenschaft und/oder einer vom Vermessungsgerät bereitgestellten Information abhängt, und
• nur die durch das dynamische und statische Filtern gefilterten Objekt-Daten mittels die Objekt-Daten repräsentierender Markierungen (21,22,23,24,25,26) zusammen mit dem Kamerabild (10) grafisch auf der Ausgabeeinheit (11) dargestellt werden, wobei die Markierungen (21,22,23,24,25,26) an einer jeweiligen durch den Positionsbezug referenzierten Stelle im Kamerabild (10) dargestellt werden.

9. Verfahren nach einem der Ansprüche 8,
**dadurch gekennzeichnet, dass**
das Filtern in Abhängigkeit eines Distanzschwellwerts (13a,13b) und/oder Winkelschwellwerts erfolgt.

10. Verfahren nach einem der Ansprüche 8 oder 9,
**dadurch gekennzeichnet, dass**
das Auswahlkriterium derart definiert wird, dass die Objekt-Daten, die eine durch den jeweiligen Positionsbezugdefinierte Position
• innerhalb eines ersten bezüglich der Aufstellposition (40) des Vermessungsgeräts definierten Distanzbereichs (13,14,15) und/oder
• innerhalb eines zweiten bezüglich der Position von bestimmten Objekt-Daten (20a) definierten Distanzbereichs (16) und/oder
• innerhalb eines definierten Winkelbereichs (19) und/oder
• innerhalb eines im Kamerabild (10) definierten Bildbereichs (17)
aufweisen, ein- oder ausgeblendet werden.

11. Verfahren nach einem der Ansprüche 8 bis 10,
**dadurch gekennzeichnet, dass**
in Abhängigkeit von einer Körperposition und insbesondere von einem Körperausmass eines Körpers (31,32,33,34,35) ein Teil der Objekt-Daten beim Filtern ausgeblendet wird, insbesondere wobei die ausgeblendeten Objekt-Daten aufgrund der Körperposition und des Körperausmasses des Körpers (31,32,33,34,35) im Kamerabild (10) perspektivisch verdeckt werden.

12. Verfahren nach einem der Ansprüche 8 bis 11,
**dadurch gekennzeichnet, dass**
das Filtern in Abhängigkeit von
• einer aktuellen Entfernungsmessung und/oder
• einer aktuellen Position einer Fokussierlinse erfolgt,
insbesondere wobei die Position der Fokussierlinse manuell oder automatisch, insbesondere mittels einer Auto-Fokussierung, eingestellt wird.

13. Verfahren nach einem der Ansprüche 8 bis 12,
**dadurch gekennzeichnet, dass**
das Auswahlkriterium mittels des Kamerabilds (10), mittels einer Draufsicht-Darstellung (60) mit den darin dargestellten Objekt-Daten, insbesondere mittels einer Kartendarstellung, und/oder durch Eingabe von Information mittels einer Eingabeeinheit, insbesondere Positionsinformation, definiert wird.

14. Verfahren nach einem der Ansprüche 8 bis 13,
**dadurch gekennzeichnet, dass**
das Filtern und Darstellen der Objekt-Daten automatisch erfolgt, insbesondere in Abhängigkeit einer vorbekannten Messanforderung.

15. Computerprogrammprodukt mit Programmcode, der auf einem maschinenlesbaren Träger gespeichert ist und/oder ausgeführt wird, zur Durchführung eines Verfahrens zum gefilterten Darstellen von Objekt-Daten nach einem der Ansprüche 8 bis 14, insbesondere wenn das Programm auf einer als Steuerungs- und Verarbeitungseinheit eines geodätischen Vermessungsgeräts nach einem der Ansprüche 1 bis 7 ausgebildeten elektronischen Datenverarbeitungseinheit ausgeführt wird.
